# EUROPEAN PATENT APPLICATION

(11) **EP 4 813 767 A1**
(43) Date of publication of application: **30.09.2026**
(21) Application number: 26167731.4
(22) Date of filing: 25.03.2026
(51) Int. Cl.: B60R 25/25, B60R 25/24, B60R 25/20, G07C 9/00

(54) **A METHOD AND A DEVICE FOR GENERATING MULTI-CHANNEL ALERT NOTIFICATIONS**

(30) Priority: 26.03.2025 IN 202541028279
(71) Applicant: TVS Motor Company Limited, 600006 Chennai (IN)
(72) Inventor: Naresh, Adepu, 600006 Chennai (IN); Narra, Anitha, 600006 Chennai (IN); Rajan, Sippy, 600006 Chennai (IN); Jinu, P Raj, 600006 Chennai (IN); Gollapalli, Chandra Kiran, 600006 Chennai (IN); Parag, Ashok Inamdar, 600006 Chennai (IN)
(74) Representative: Patentanwaltskanzlei Matschnig & Forsthuber OG

(57) **Abstract**

The present invention discloses a method 200 and an access control device 102 for generating multi-channel alert notifications. The method comprises receiving 202 user data 103, the user data 103 comprising at least one of a finger print data, a facial image, an identification from a communication device 104, an identification from a key fob 105, an identification from a paired communication device 104, a touch pattern, a behavioral pattern and a voice command. The method comprises extracting 203 unique features from the user data 103, comparing 204 one or more unique features with pre-stored user data 116. The method comprises generating, for a failed access when the comparison fails, multi-channel alert notifications, the multi-channel alert notifications comprising at least one visual alert, at least one auditory alert and at least one remote alert.

## Description

### TECHNICAL FIELD

The claimed subject matter in general relates to vehicle security systems. The claimed subject matter also relates in general to automotive electronics, IoT based security solutions, and intelligent access control systems for vehicles. The claimed subject matter in particular relates to multi-channel alert systems for unauthorized access detection.

### BACKGROUND

Vehicle security and user access control systems are crucial for ensuring the safety and protection of vehicles, while also providing personalized experience for the users. Modem vehicles are increasingly incorporating advanced technologies for user identification, such as biometric scans, RFID tags, and PIN-based authentication, to provide secure access. However, despite these advancements, a significant issue remains in the event of un-authorized or failed accesses.

Conventional vehicle user identification systems often face a few key challenges: many existing systems rely on a single method of alerting the owner or security service in case of failed identification attempts or unauthorized access attempts, such as a basic audible alarm. While this might work in some situations, it often lacks robustness and can be ineffective in noisy or outdoor environments where the sound may not be heard. Additionally, these systems may not notify the owner or security personnel in real-time, leaving the vehicle vulnerable.

Some systems rely solely on local notifications within the vehicle or manual monitoring of the system. In the case of an unauthorized access attempt, a delay in alerting the owner or security personnel can increase the risk of theft or vandalism of the vehicle. This delay is especially problematic in shared vehicles, fleet management, or rental car systems, where the owner or fleet manager may not be present to take immediate action.

In many current systems, the failure of user identification only triggers limited response methods, often just sound-based alerts or visual indicators. While these measures may be useful in certain scenarios, they fail to provide the level of communication necessary to address the diverse needs of vehicle owners and security services.

Vehicles located in busy areas, such as parking lots or urban streets, may face a significant time gap between initial access failure and alert escalation. Without sufficient real-time communication, unauthorized individuals may continue to attempt access, further heightening the risk of vehicle theft or misuse.

Presently, there are no known arts generating multi-channel alerts in real time in case of unauthorized access attempt on a vehicle

Thus, there is a need to address the aforementioned problems.

### SUMMARY OF THE INVENTION

The claimed subject matter is defined in the independent claims. Further details are defined in the dependent claims.

The claimed subject matter discloses a method for generating multi-channel alert notifications for a failed access or unauthorized access attempt. The method comprises receiving user data, the user data comprising at least one of a finger print data, a facial image, an identification from a communication device, an identification from a key fob, presence of a paired communication device, a touch pattern, a behavioral pattern and a voice command. The method comprises extracting unique features from the user data, the unique features comprising a finger print pattern, facial features, a password from the communication device, a password from the key fob, an identification form the paired communication device, a touch pattern, a behavioral pattern and a voice pattern;

The method comprises comparing one or more unique features with a pre-stored user data, the pre-stored user data comprising at least one of a valid finger print data, a valid facial image, a valid identification of a communication device, a valid identification from a key fob, a valid identification of the paired communication device in the proximity, a valid behavioral pattern, a valid touch pattern and a valid voice command. The method comprises, when the comparison fails, generating multi-channel alert notifications, generating the multi-channel alert notifications comprising generating at least one visual alert, generating at least one auditory alert and generating at least one remote alert.

The access control device comprises a processor, a memory coupled to the processor, the processor configured to receive user data, to compare the user data with a pre-stored user data, to generate multi-channel alert notifications, when the comparison fails.

The features discussed herein and advantages of the claimed subject matter will be better understood with reference to the detailed description, drawings and claims. This summary is provided to introduce the claimed subject matter in a simplified form. This summary is not intended to identify key features or essential features of the claimed subject matter, nor is it intended to be used to limit the scope of the claimed subject matter.

### BRIEF DESCRIPTION OF THE DRAWINGS

The detailed description is described with reference to the accompanying figures. In the figures, similar reference numerals are used throughout the drawings to reference like features and components.
Figure 1 illustrates a system for generating multi-channel alert notifications for a failed access according to one embodiment of the present disclosure.
Figure 2 illustrates a method for generating multi-channel alert notifications for a failed access according to one embodiment of the present disclosure.

### DETAILED DESCRIPTION

The claimed subject matter now will be described with exemplary embodiments. However, the claimed subject matter may be embodied in many different forms and should not be construed as limited to the embodiments described herein. These embodiments are provided only as examples so that this disclosure is clear and concise.

Some of the terms used in this document may be used with different expressions and also interchangeably. Some examples are given below.

The term 'Vehicle' may indicate any kind of motor vehicle, for example, a two wheeled vehicle, a three wheeled vehicle, car or any other kind of vehicle. The term 'coupled' is used to indicate coupling between different elements, it may mean directly coupled or indirectly coupled through additional elements. The terms 'module' and 'component' may be used interchangeably. The 'identification' of a communication device may refer to a password of the communication device. The communication device may refer to a mobile phone or any other communication device.

Only the details/components required to describe the claimed subject matter in specific, are disclosed in this document. The details/components which are commonly known or understood by people skilled in the art may not be covered in this document.

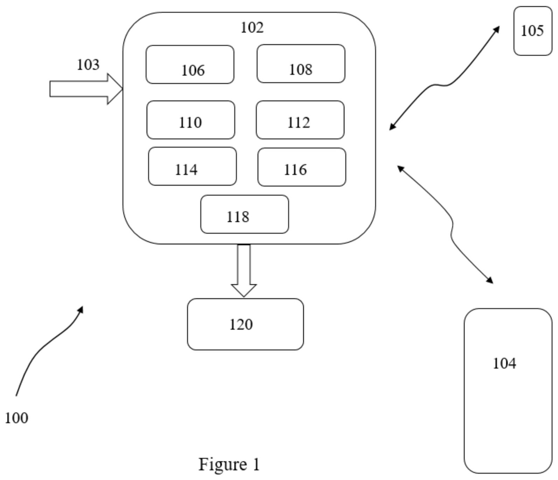

Figure 1 discloses a system for generating multi-channel alert notifications for a failed access. The system 100 comprises an access control device 102, a communication device 104 and a key fob 105. The communication device 104 may be a mobile phone or any wireless communication device. The access control device 102 is referred as device 102 henceforth.

The device 102 comprises a processor 106, a memory 108 coupled to the processor, interfaces 114, pre-stored user data 116 stored in the memory 106. In an embodiment the device 102 comprises a communication unit 110, a voice authentication unit 112, a touch sensor 115, a finger print sensor 117 and a camera 119. In an embodiment the communication unit 110, the voice authentication unit 112, the touch sensor 115, the finger print sensor 117, the camera 119 may be external to the device 102. They are connectable to the device 102 through interfaces 114. The finger print sensor 117, the camera 119 may be fixed near the instrumentation cluster of a two wheeled vehicle or on door or the door frame of any other vehicle. The communication unit 110 handles transmission and reception of data from and to the communication device 104.

When a user tries to unlock the vehicle, using a key fob 105, a mobile phone 104, a finger print scan, a voice command or any other unlocking mechanism, the device 102 captures various user data 103 through the interfaces 114 and/or the communication unit 110. The user data 103 comprises different types of data like, finger print data, facial image, voice command, interaction patterns such as touch pattern or unlocking behaviour, door unlock patterns, detection of a paired mobile phone 104 or a key fob 105 within proximity, password from a mobile phone, password from a key fob 105 etc. The touch sensor 115 may be placed in the instrumentation cluster in a two wheeled vehicle or on the door handle of other vehicles, to capture the touch pattern/unlock pattern. Behavioural pattern may comprise data regarding how the door handle was touched, how the door handle was pulled, how the door handle was pressed, how the instrumentation cluster was touched, how the finger was placed on the finger print sensor 117etc. The behavioural pattern data is obtained from the finger print sensor 117 and the touch sensor 115.

Once the user data 103 is captured by the device 102, the user data 103 is analyzed to extract unique features. The unique features may comprise finger print pattern, facial features, password from the mobile phone 104, password from the key fob 105, detection of paired mobile device 104, touch pattern, behavioral pattern, voice pattern etc. Pattern recognition, biometric analysis, machine learning models may be used to analyze the user data and to enhance the accuracy of unique features.

Once the user data is analyzed and unique features are extracted, the unique features are compared with the features in the pre-stored user data.

In an embodiment, unique features extracted from a single type of user data, for example, finger print pattern, voice pattern, touch pattern etc. may be used for comparison with pre-stored user data. In an embodiment, for robust access control, unique features from at least two types of user data may be used for comparison. For example, using facial features along with a password of the mobile phone, or using finger print pattern with a voice pattern, will increase the accuracy of detecting an authorized user. By incorporating combination of biometric verification and behavioral authentication or voice authentication, the system minimizes false alerts caused by accidental or unauthorized key fob use, reducing unnecessary disturbances for users.

The pre-stored user data may comprise data of multiple users who are authorized to access the vehicle.

Once the unique features from the user data are compared with the pre-stored user data and a match is found, the device 102 unlocks the vehicle. If two types of data are used for comparison, both types should match to unlock the vehicle using the interfaces 114 which are connected to electro-mechanical elements like a solenoid, a lever, cables etc.

If the comparison fails, i.e. the unique feature from the user data 103 is compared with the pre-stored user data and no match is found, the attempt to access the vehicle is considered as an un-authorized attempt or a failed attempt. The device 102 generates multi-channel alerts to the owner of the vehicle. The multi-channel alerts are visual alerts, auditory alerts and remote alerts.

The visual alerts comprise dashboard indicators and a flashing lamp. The auditory alerts are audio output for a horn and a siren. These auditory alerts deter the unauthorized person from further activities to access the vehicle. The remote alerts comprise a notification to be sent to the owner's mobile phone 104, an SMS to be sent to the owner's mobile phone 104, an Email to be sent to the registered Email account of the owner and a notification to be sent to the owner's account in a cloud-based server.

In an embodiment the system can be dynamically adjusted for its security response based on the severity of the authentication failure, e.g., a single failed attempt may trigger a local notification like dashboard indicator or flashing lights, while multiple failed attempts may activate siren and remote alert escalation. Flashing lights may be fitted near the door handles.

In an embodiment the device 102 is connected to an instrumentation cluster unit 120. The dashboard indicators and a flashing lamp are part of the instrumentation cluster 120. The device 102 sends signals to instrumentation cluster 120 activate dashboard indicators and a flashing lamp. In an embodiment the flashing lamp could be on the exterior of the vehicle and may be controlled by the device 102 through interfaces 114. In an embodiment the device 102 and the instrumentation cluster unit 120 are combined and implemented as one unit. In an embodiment the instrumentation cluster unit 120 itself has functionalities of the device 102.

The device 102 comprises interfaces 114 to receive user data 103. The interfaces 114 may also comprise wiring harness connected to various sensors and other control units in the vehicle, for example, instrumentation cluster unit 120. The interfaces 114 may comprise input ports to receive data from voice authentication unit 112, finger print sensor 117, touch sensor 115, camera 119 etc. The interfaces 114 comprises output ports to output various signals, for example, flashing lights, horn output, output for a siren etc.

There may be different modules to perform different functionalities, for example, a receiving module to receive user data 103, a transmitting module to transmit remote alerts, and output module to output notifications at the vehicle. There may be module to send different notifications to different interfaces. These may be implemented as individual modules. In an embodiment, one or more of these modules may be combined. These modules may be implemented in hardware, firmware or a combination.

The processor 106 may comprise one or more of a central processing unit (CPU), a digital signal processor (DSP), an application specific integrated circuit (ASIC), a controller, a field programmable gate array (FPGA), or any other hardware device, a firmware device, or any combination of these. The processor 106 is configured using control registers, input output ports, firmware, interfaces 114 etc. to perform the operations described herein.

In an embodiment, the memory 108 comprises one or more volatile and non-volatile memory components which are capable of storing data and instructions to be executed.

The pre-stored user data comprises a valid finger print data, a valid identification of a mobile phone 104, a valid identification of a key fob 105, a valid facial image, a valid behavioral pattern of access and a valid voice command. These data are stored during storing phase of the device 102. The device 102 may be put into storing mode through a settings menu and all these data may be captured by the device 102 and pre-stored. The pre-stored user data 116 may be stored for multiple users who are authorized. The valid identification of a mobile phone and a valid identification of a key fob 105 may be their passwords.

Fingerprint scanning, analysis and voice command analysis for authentication are known concepts and hence not descried.

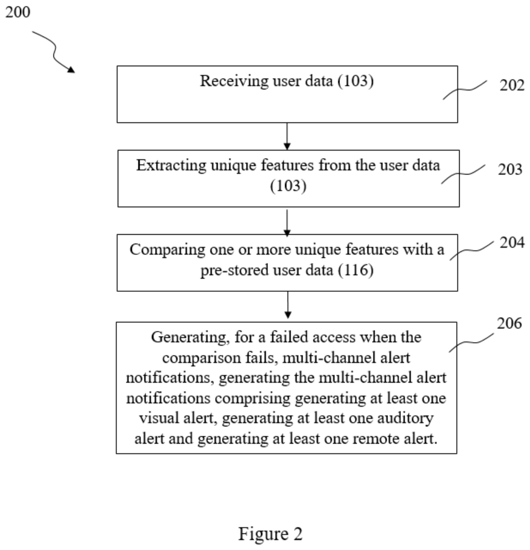

Figure 2 discloses a method 200 for generating multi-channel alert notifications for a failed access. Step 202 comprises receiving user data 103. The user data 103 comprises different types of data like, finger print data, facial image, voice command, interaction patterns such as touch pattern or unlocking behaviour, door unlock patterns, detection of a paired mobile phone 104 or a key fob 105 within proximity, password from a mobile phone, password from a key fob 105 etc.

Step 203 comprises extracting unique features from the user data 103. The unique features may comprise finger print pattern, facial features, password from the mobile phone 104, password from the key fob 105, detection of paired mobile device 104, touch pattern, behavioral pattern, voice pattern etc.

Step 204 comprises comparing the unique features with a pre-stored user data 116. The pre-stored user data 116 comprises at least one of a valid finger print data, a valid identification from a mobile phone 104, a valid identification from a paired mobile phone 104, a valid identification from a key fob 105, a valid facial image, a valid touch pattern, a valid behavioral pattern and a valid voice command. Step 206 comprises, when the comparison fails, generating multi-channel alert notifications i.e. generating at least one visual alert, generating at least one auditory alert and generating at least one remote alert.

Every access attempt, including failed attempts, are logged with timestamps, location, and unlocking method, allowing for forensic analysis in case of theft or security breaches. The unlocking method may be a forced opening of a door, forced door handle, tampering of the door lock, attempt to hack access control through a hacked password from a mobile phone etc.

Vehicle owners can monitor and manage security settings remotely via a mobile app, receiving alerts even when they are away from the vehicle and taking preventive actions, such as remotely locking the vehicle.

The system 100 can be easily adapted to role-based authentication. This can be done while storing the user settings, enabling fleet owners to control who can access which vehicle and when, reducing misuse and unauthorized access in shared vehicle environments.

The claimed disclosure has the following technical advantages.

Unlike conventional systems that rely on a single alert mechanism such as an alarm, this disclosure provides visual, auditory, and remote notifications, ensuring that security alerts reach the owner through multiple redundant channels.

The system's real-time processing of biometric and behavioral data allows for instant user authentication and immediate threat detection, reducing unauthorized access risks.

The system supports various authentication methods, e.g., fingerprint, facial recognition, voice recognition, mobile device pairing, making it adaptable to different vehicle models and security needs.

By incorporating a combination of biometric verification, behavioral authentication, identification through mobile phone 104, a key fob 105, the system minimizes false alerts caused by accidental or unauthorized key fob 105 use, reducing unnecessary disturbances for users.

The system implements encryption and secure communication protocols to prevent hacking, data interception, or unauthorized access to stored biometric profiles and authentication data.

The system allows for layered security, requiring users to authenticate through multiple methods, e.g. biometrics, PIN key for mobile, mobile phone proximity etc. making it significantly harder for unauthorized users to bypass.

Vehicle owners can monitor and manage security settings remotely via a mobile app, receiving alerts even when they are away from the vehicle and taking preventive actions, such as remotely locking the vehicle.

The disclosure can seamlessly integrate with smart home security systems, allowing automatic triggers, such as turning on home surveillance cameras or locking doors based on vehicle security status.

The system 100 can dynamically adjust its security response based on the severity of the authentication failure, e.g., a single failed attempt may trigger a notification, while multiple failed attempts may activate an alarm and remote alert escalation.

The system 100 supports role-based authentication, enabling fleet owners to control who can access which vehicle and when, reducing misuse and unauthorized access in shared vehicle environments.

Every authentication attempt, including failed attempts, is logged with timestamps, location, and unlocking method, allowing for forensic analysis in case of theft or security breaches.

The system 100 can be designed to optimize power consumption, using low-power biometric sensors and efficient processing algorithms, ensuring it does not drain the vehicle's battery excessively.

### List of Reference numerals

- 100: System for generating multi-channel alert notifications
- 102: Access control device
- 103: User data
- 104: Mobile phone
- 105: Key fob
- 106: Processor
- 108: Memory
- 110: Communication unit
- 112: Voice authentication unit
- 114: Interfaces
- 115: Touch sensor
- 116: Pre-stored user data
- 117: Finger print sensor
- 118: Camera
- 120: Instrumentation cluster

## Claims

1. A method (200) for generating multi-channel alert notifications, the method (200) comprising:
receiving (202) user data (103), the user data (103) comprising at least one of a finger print data, a facial image, an identification from a communication device (104), an identification from a key fob (105), presence of the paired communication device (104) in the proximity, a touch pattern, a behavioral pattern and a voice command;
extracting (203) unique features from the user data (103), the unique features comprising a finger print pattern, facial features, a password from the communication device (104), a password from the key fob (105), an identification of the paired communication device (104) in the proximity, a touch pattern, a behavioral pattern and a voice pattern;
comparing (204) one or more unique features with a pre-stored user data (116), the pre-stored user data (116) comprising at least one of a valid finger print data, a valid facial image, a valid identification of a communication device (104), a valid identification of a key fob (105), a valid identification of the paired communication device (104) in the proximity, a valid touch pattern, a valid behavioral pattern and a valid voice command; and
generating (206), for a failed access when the comparison fails, multi-channel alert notifications, generating the multi-channel alert notifications comprising:
generating at least one visual alert;
generating at least one auditory alert; and
generating at least one remote alert.

2. The method (200) as claimed in claim 1, wherein generating the visual alert comprises activating at least one of a dashboard indicator and a flashing lamp.

3. The method (200) as claimed in claim 1, wherein generating the auditory warnings comprises activating at least one of a horn and a siren.

4. The method (200) as claimed in claim 1, wherein generating the remote alert comprises generating at least one of:
a notification to be sent to the communication device (104);
an SMS to be sent to the communication device (104);
an Email to be sent to a registered Email account of the owner; and
a notification sent to the owner's account in a cloud-based server.

5. The method (200) as claimed in claim 1, wherein generating remote alerts comprises generating remote alerts containing at least one of: details of time of failed access, location of failed access and method of a failed access.

6. An access control device (102) to generate multi-channel alert notifications, the access control device (102) comprising:
a processor (106);
a memory (108) couple to the processor (106);
wherein the processor (106) configured to:
receive user data (103), the user data (103) comprising at least one of a finger print data, a facial image, an identification from a communication device (104), an identification from a key fob (105), presence of the paired communication device (104) in the proximity; a touch pattern, a behavioral pattern and a voice command;
extract unique features from the user data (103), the unique features comprising a finger print pattern, facial features, a password from the communication device (104), a password from the key fob (105), an identification of the paired communication device (104) in the proximity, a touch pattern, a behavioral pattern and a voice pattern;
compare one or more unique features with a pre-stored user data (116), the pre-stored user data (116) comprising at least one of a valid finger print data, a valid facial image, a valid identification of a communication device (104), a valid identification of a key fob (105), an identification of the paired communication device (104) in the proximity, a valid touch pattern, a valid behavioral pattern and a valid voice command; and
generating, for a failed access when the comparison fails, multi-channel alert notifications, the multi-channel alert notifications comprising:
at least one visual alert;
at least one auditory alert; and
at least one remote alert.

7. The access control device (102) as claimed in claim 6, wherein the visual alert comprises at least one of a dashboard indicator and a flashing lamp.

8. The access control device (102) as claimed in claim 6, wherein auditory warnings comprises at least one of an audio output on a horn and an audio output on a siren.

9. The access control device (102) as claimed in claim 6, wherein the remote alerts comprise at least one of:
a notification to be sent to the communication device (104);
an SMS to be sent to the communication device (104);
an Email to be sent to a registered Email account of the owner; and
a notification sent to the owner's account in a cloud-based server.

10. The access control device (102) as claimed in claim 6, wherein the remote alerts comprise details of time of failed access, location of failed access and method of failed access.

11. The access control device (102) as claimed in claim 6 is an instrumentation cluster (120).

12. The access control device (102) as claimed in claim 6 is connectable to an instrument cluster (120).

13. The access control device (102) as claimed in claim 6 wherein a valid behavioral pattern of access comprises at least a data regarding how the vehicle door handle was touched, how the vehicle door handle was pulled, how the vehicle door handle was pressed, how the instrumentation cluster (120) was touched, how the finger was placed on the finger print sensor 117.

14. The access control device (102) as claimed in claim 6 comprising a voice authentication unit (118) to authenticate the voice command.
